# EUROPÄISCHE PATENTSCHRIFT

(11) **EP 2 070 285 B1**
(45) Veröffentlichungstag und Bekanntmachung des Hinweises auf die Patenterteilung: **27.01.2010**
(21) Anmeldenummer: 07820495.5
(22) Anmeldetag: 24.09.2007
(51) Int. Cl.: H04L 29/06

(54) **VERFAHREN ZUR OPTIMIERUNG DER NSIS-SIGNALISIERUNG BEI MOBIKE-BASIERENDEN MOBILEN ANWENDUNGEN**
METHOD FOR OPTIMIZING NSIS SIGNALING IN MOBIKE-BASED MOBILE APPLICATIONS
PROCÉDÉ D'OPTIMISATION DE LA SIGNALISATION NSIS DANS DES APPLICATIONS MOBILES À BASE MOBIKE

(30) Priorität: 28.09.2006 DE 102006046023
(43) Veröffentlichungstag der Anmeldung: 17.06.2009
(73) Patentinhaber: SIEMENS AKTIENGESELLSCHAFT, 80333 München (DE)
(72) Erfinder: PASHALIDIS, Andreas, 69181 Leimen (DE)
(86) Internationale Anmeldenummer: PCT/EP2007/060088
(87) Internationale Veröffentlichungsnummer: WO 2008/037685

(56) Entgegenhaltungen:
- NEXT STEPS IN SIGNALING (NSIS) H CHENG J HUANG T SANDA T UE PANASONIC: "NSIS Flow ID and packet classification issues; draft-cheng-nsis-flowid-issues-02.txt" IETF STANDARD-WORKING-DRAFT, INTERNET ENGINEERING TASK FORCE, IETF, CH, Nr. 2, 24. Oktober 2005 (2005-10-24), XP015042098 ISSN: 0000-0004
- DEVARAPALLI AZAIRE NETWORKS P ERONEN NOKIA V: "Secure Connectivity and Mobility using Mobile IPv4 and MOBIKE; draft-ietf-mip4-mobike-connectivity-01.txt " IETF STANDARD-WORKING-DRAFT, INTERNET ENGINEERING TASK FORCE, IETF, CH, Bd. mip4, Nr. 1, 13. Juni 2006 (2006-06-13), XP015045650 ISSN: 0000-0004
- KIVINEN SAFENET T ET AL: "Design of the IKEv2 Mobility and Multihoming (MOBIKE) Protocol; rfc4621.txt" IETF STANDARD, INTERNET ENGINEERING TASK FORCE, IETF, CH, 1. August 2006 (2006-08-01), XP015047385 ISSN: 0000-0003

## Beschreibung

Die Erfindung betrifft ein Verfahren zur Verringerung des Signalisierungs-Overheads eines Mobilen Knotens, der mindestens eine aktive Next-Steps-In-Signaling-Signalisierungs-Session unterhält sowie eine MOBIKE Verbindung mit einem Virtuellen-Privaten-Netzwerk (VPN) -Gateway hat, und der seinen Anknüpfungspunkt an das Internet wechselt, gemäß dem Oberbegriff des Anspruchs 1.

Ein Virtuelles Privates Netz (VPN) ist ein Computernetz, das zum Transport privater Daten ein öffentliches Netz, beispielsweise das Internet nutzt. Teilnehmer eines VPN können Daten wie in einem internen lokalen Netzwerk (Local Area Network; LAN) austauschen. Die einzelnen Teilnehmer selbst müssen hierzu nicht direkt verbunden sein. Die Verbindung über das öffentliche Netz wird üblicherweise verschlüsselt. Eine Verbindung eines Teilnehmers, welcher einen so genannten VPN-Client nutzt, mit seinem Heimatnetz, welches einen so genannten VPN-Server zur Verfügung stellt, wird über einen Tunnel zwischen dem VPN-Client und dem VPN-Server ermöglicht. Meist wird der Tunnel dabei gesichert, aber auch ein ungesicherter Klartexttunnel kann dazu genutzt werden, einen VPN-Client mit einem VPN Server zu verbinden.

Ein VPN kann u.a. dazu dienen, Mitarbeitern außerhalb einer Organisation oder eines Unternehmens Zugriff auf das interne Netz zu geben. Dabei baut der Computer des Mitarbeiters eine VPN-Verbindung zu einem VPN-Gateway des Unternehmens auf. Über diese Verbindung ist es dem Mitarbeiter nun möglich, so zu arbeiten, als ob er im lokalen Netz des Unternehmens wäre.

Um eine sichere Übertragung von Daten in VPNs ermöglichen zu können, werden spezielle Protokolle benötigt. Eine Gruppe von solchen Protokollen ist zusammenfassend unter IP-security (IPsec) bekannt. Dazu gehört unter anderem das Internet Key Exchange Version 2 (IKEv2) Protokoll. Es ist dafür verantwortlich, die Schlüssel zu erzeugen, die von den kryptographischen Mechanismen auch anderer Protokolle benötigt werden. Eine unter Verwendung von IPsec aufgebauter Tunnel für eine VPN-Verbindung wird auch als IPsec-Tunnel bezeichnet. Das Mobile-Internet-Key-Exchange-Protokoll (MOBIKE-Protokoll) erweitert das in IPsec enthaltene IKEv2, indem es dem VPN-Client ermöglicht, seinen Anknüpfungspunkt an das Netzwerk zu wechseln, ohne dass der dadurch erfolgte Wechsel seiner Internet-Protokoll (IP) -Adresse dazu führt, dass seine VPN-Session erneut aufgebaut werden muss.

In einem typischen VPN-Szenario tauschen ein VPN-Client und ein VPN-Gateway Daten über einen IPsec-Tunnel aus. Wenn der VPN-Client ein Mobiler Knoten (MK), beispielsweise ein Laptop, ein Palmtop, ein Personal Digital Assistent (PDA) oder dergleichen ist, und wenn dieser seinen Anknüpfungspunkt zum Internet ändert, ändert sich auch seine IP-Adresse. Wie dieser Adresswechsel im VPN-Szenario effektiv gehandhabt wird, ist im MOBIKE-Protokoll spezifiziert. Wenn der MK eine Next-Steps-In-Signaling (NSIS) -Signalisierungs-Session für diesen Tunnel initiiert hat, dann muss bei einem Wechsel des Anknüpfungspunktes der Zustand aller NSIS-fähigen Knoten, die entlang des Pfades des Tunnels an der Signalisierung teilnehmen aktualisiert werden, um dem Wechsel der IP-Adresse des MK folgen zu können. Dieser Prozess stellt einen Overhead dar, der umso größer wird, umso öfter der MK seinen Anknüpfungspunkt wechselt. Eine zusätzliche Verschwendung von Ressourcen kann darüber hinaus auftreten, wenn die oben benannten NSIS Knoten Ressourcen für den Datenstrom des IPsec-Tunnels reserviert haben. Solche Ressourcenreservierungen, wie etwa Übertragungsgeschwindigkeit, Bandbreite und dergleichen, werden beispielsweise dann reserviert, wenn es sich bei der Signalisierung um eine Quality of Service (QoS) -Signalisierung, beispielsweise um das von der NSIS-Arbeitsgruppe erstellte QoS-NSLP (Quality of Service NSIS Signaling Layer Protocol) handelt. Die oben benannte Verschwendung tritt deshalb auf weil im Zeitraum zwischen dem Adresswechsel und der oben benannten Zustandsaktualisierung, die reservierten Ressourcen weder dem Datenstrom des IPsec-Tunnels, noch an anderer Stelle zur Verfügung stehen. Das bedeutet ebenso, dass der Datenstrom bis zum erfolgten Aktualisieren aller NSIS-Knoten entlang des Pfades die für ihn reservierte Ressourcen nicht beanspruchen kann. Dies wiederum bedeutet dass Anfangs zugesagte QoS-Garantien nicht eingehalten werden. Dem Benutzer wird dies dadurch bewusst indem sich z.B. die Übertragungsgeschwindigkeit deutlich verschlechtert.

Aus dem Stand der Technik sind keine Lösungen bekannt, welche eine Optimierung der NSIS-Signalisierung bei wechselndem Anknüpfungspunkt des MK in MOBIKE-Umgebungen ermöglichen. Die Arbeitsberichte der NSIS-Arbeitsgruppe, siehe zum Beispiel dratt-cheng-nsis-flowid-issues-02.txt, beschreiben lediglich die grundsätzlichen Methoden, wie die NSIS-Signalisierungs-Protokolle in mobilen Szenarios anzuwenden sind. Diese Methoden fordern, dass der MK immer Signalisierungs-Nachrichten sendet, wenn sich seine IP-Adresse ändert. Aufgabe dieser Nachrichten ist, die Zustände der an der Signalisierungs-Session beteiligten NSIS-Knoten mit der aktuellen IP-Adresse des MK zu aktualisieren.

Eine Aufgabe der Erfindung ist es deshalb, ein Verfahren anzugeben, welches die oben genannten Verzögerungen und die damit verbundene Verschwendung von Ressourcen unterbindet.

Diese Aufgabe wird durch ein Verfahren nach Anspruch 1 gelöst. Vorteilhafte Weiterbildungen der Erfindung ergeben sich aus den abhängigen Ansprüchen und der nachfolgenden Beschreibung.

Das erfindungsgemäße Verfahren zur Verringerung des Signalisierungs-Overheads bzw. zur Verringerung der Resourcenverschwendung, die auftreten kann, wenn ein Mobiler Knoten, der mindestens eine aktive Next-Steps-In-Signaling-Signalisierungs-Session unterhält, und der eine MOBIKE Verbindung mit einem VPN Gateway hat, seinen Anknüpfungspunkt an das Internet wechselt, umfasst die Verfahrensschritte:
- Einfügen der IP-Adresse des VPN-Gateways und/oder eines mit dem Subnetz des VPN-Gateways übereinstimmenden Adressraums in ein nach dem General Internet Signaling Transport (GIST) -Protokoll in der NSIS-Signalisierungs-Nachricht enthaltenes Message-Routing-Information (MRI) -Objekt
- Festlegung eines Werts für einen Sicherheits-Parameter-Index (Security Parameter Index; SPI),
- Einfügen des SPI-Werts in das MRI-Objekt,
- Setzen des in GIST definierten S-Flags im MRI-Objekt, sowie
- Einfügen eines sich auf die IP-Adresse des MK beziehenden Adressraums in das MRI-Objekt.

Der sich auf die IP-Adresse des MK beziehende Adressraum wird durch Angabe einer IP-Adresse des MK und eines Präfix angegeben. Der Präfix gibt an, welcher Teil der IP-Adresse des MKs sich ändern kann, ohne dass die IP-Adresse des MKs den zugehörigen Adressraum verlässt. Dem GIST Standard nach benutzen die an der Signalisierungssession teilnehmenden NSIS-Knoten den IP-Adressbereich, der durch das die IP-Adresse des MK und den Präfix umfassende Paar definiert wird, um die dem Datenstrom des IPsec-Tunnels angehörenden Pakete zu identifizieren. Genauer gehören Datenpakete dem Datenstrom an, wenn die im IP-Header angegebene IP-Adresse des MK im diesem Adressbereich liegt. Wenn sich nun die IP-Adresse des MK innerhalb diesen Adressbereichs ändert, muss auch keine Aktualisierung der Zustände der NSIS-Knoten entlang des Pfades des IPsec-Tunnels mehr erfolgen. Dadurch wird der Overhead und die eventuell anfallende Ressourcenverschwendung wirkungsvoll verringert bzw. vermieden. Der Datenstrom zwischen dem MK und dem MOBIKE Server kann ohne Verzögerungen weiterfliesen.

Eine vorteilhafte Ausgestaltung des erfindungsgemäßen Verfahrens sieht vor, dass im MRI-Objekt ein Adressraum für die IP-Adresse des MK angegeben wird, der die unter Berücksichtigung der üblichen Bewegung des MKs zu erwartenden möglichen IP-Adressen für den MK umfasst. Dabei ist denkbar, dass die Bewegungen des MKs überwacht, und die dem MK während seiner Bewegung zugeteilten IP-Adressen gespeichert werden, um hieraus ein bevorzugtes Bewegungsprofil und einen Adressraum abzuleiten, der die dem MK innerhalb seines ermittelten bevorzugten Bewegungsraumes zugeteilten IP-Adressen umfasst.

Gemäß einer vorteilhaften Ausgestaltung der Erfindung ist vorgesehen, dass der MK vorzugsweise nur eine einzige IP-Adresse für das VPN-Gateway im MRI-Objekt angibt und den Adressraum für die eigene IP-Adresse so weit wie möglich einschränkt. Dies ist dann sinnvoll, wenn sich der MK gegenwärtig nur innerhalb des zu seiner momentanen IP-Adresse gehörenden, seinem Zugangsnetz zugeordneten Adressraums bewegt. Ein solcher Fall tritt häufig in Netzwerken großer Unternehmen oder Organisationen auf, innerhalb denen sich die MKs frei bewegen können. Adressräume können durch Angabe einer innerhalb des Adressraums liegenden IP-Adresse und einem Bereich, um den eine neue IP-Adresse von der vorgegebenen IP-Adresse abweichen kann angegeben werden. Indem der MK den Adressraum, innerhalb dem seine IP-Adresse liegt, so weit wie möglich einschränkt, wird die Wahrscheinlichkeit verringert, dass Kollisionen auftreten.

Bei allen oben angegebenen Ausführungsformen des erfindungsgemäßen Verfahrens ist denkbar, dass der SPI-Wert durch das VPN-Gateway derart festgelegt wird, dass Kollisionen zwischen verschiedenen IPsec-Tuneln, die zwischen unterschiedlichen MKs und dem selben VPN-Gateway bestehen, vermieden werden. Das VPN-Gateway ist in der Lage, SPI-Werte so festzulegen, dass innerhalb des VPNs nicht dieselben SPI-Werte für mehrere unterschiedliche, nach dem MOBIKE-Standard aufgebaute, MK-zu-VPN IPsec-Tunnel vorkommen. In Anbetracht der Tatsache, dass der SPI-Wert 32 Stellen aufweist, entsprechend 2³² möglichen verschiedenen SPI-Werten, genügt dies für die meisten Anwendungsfälle.

Ebenso ist denkbar, dass der SPI-Wert zufällig ausgewählt, oder mittels einer geeigneten Funktion durch den NSIS-Session-Identifier oder anderer geeigneter Daten festgelegt wird. Die zufällige Festlegung ist sehr einfach und kostengünstig umsetzbar und es ist sehr unwahrscheinlich, dass ein zufällig ausgewählter SPI-Wert für den VPN-nach-MK-Tunnel eines MKs mit den SPI-Werten anderer MKs übereinstimmt.

Nachfolgend wird die Erfindung anhand der Zeichnungen näher erläutert. Dabei zeigen:
- Fig. 1: eine schematische Darstellung eines über mehrere NSIS-Knoten verlaufenden IPsec-Tunnels zwischen ei- nem MK und einem VPN-Gateway, sowie
- Fig. 2: eine schematische Darstellung des Ablaufs eines er- findungsgemäßen Verfahrens.

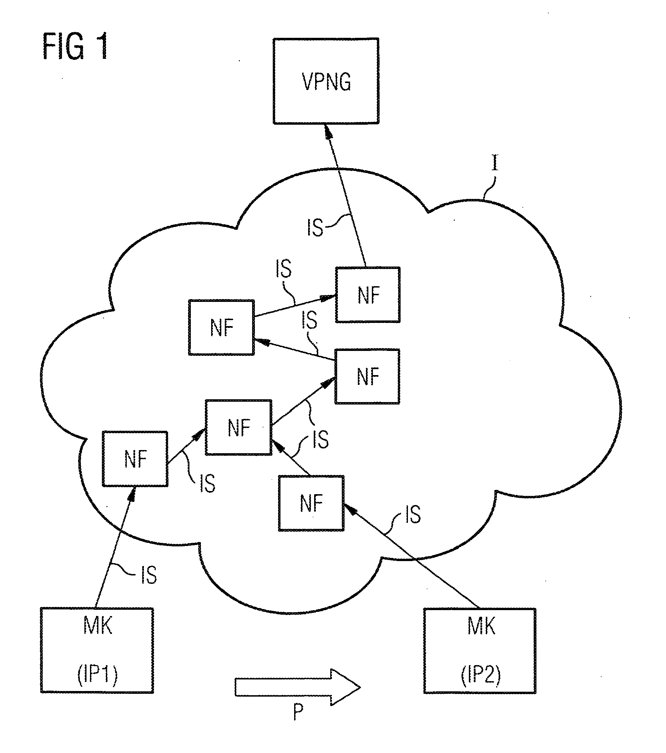

In einem in Fig. 1 schematisch dargestellten Szenario in dem ein Mobiler Knoten MK, der
a) eine IPsec Verbindung mit einem durch MOBIKE verwalteten VPN-Gateway VPNG hat, und
b) an einer NSIS-Signalisierungs-Session teilnimmt, seine IP-Adresse ändert, wird der bereits in den entlang des Tunnel-Pfades liegenden NSIS-Knoten NF installierte Signalisierungszustand ungültig und muss aktualisiert werden. In Fig. 1 deuten die mit IS gekennzeichneten Pfeile die mittels MOBIKE verwaltete IPsec Verbindung an. Der Pfeil P deutet an, dass sich der MK bewegt. Diese Bewegung bewirkt dass der MK anstelle seiner bisherigen IP-Adresse IP1 eine neue IP-Adresse IP2 erhält, da sich sein Anknüpfungspunkt zum VPN-Gateway VPNG im Internet I ändert. Daraufhin muss das MOBIKE-Protokoll den Zustand am VPN-Gateway VPNG aktualisieren. Die mit NF, für NSIS-Forwarder, gekennzeichneten NSIS-Knoten sind diejenigen NSIS-Knoten, deren Zustände nach der Bewegung des MKs aktualisiert werden müssen. Hieraus ergeben sich die folgenden Probleme:
   - Die Signalisierung für das Aktualisieren muss initiiert werden. Dies stellt für sich allein bereits einen Overhead dar.
   - Der Datenstrom, also die Übertragung der Datenpakete entlang des IPsec-Tunnels, erfährt so lange nicht die durch die Signalisierung vorgesehene Behandlung, bis die Zustände aller NSIS-Knoten entlang des Pfades des Tunnels aktualisiert sind. Hierdurch wird die Leistungsfähigkeit der Verbindung beeinträchtigt, und einem Anwender können sogar Kosten für Dienste entstehen, die er durch diese Verzögerung nicht oder nur eingeschränkt erhält.
   - Ressourcen müssen für nicht ständig vorhandene Signalisierungs-Sessions so lange freigehalten werden, bis alle Zustände der NSIS-Knoten entlang des Pfades des Tunnels aktualisiert sind. Dies stellt eine Verschwendung von Ressourcen dar.

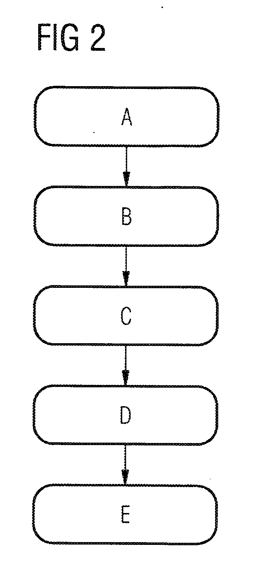

Die oben genannten Probleme werden durch ein in Fig. 2 schematisch in seinem Ablauf dargestelltes erfindungsgemäßes Verfahren zur Verringerung des Overheads einer NSIS-Signalisierungs-Nachricht eines MKs in einem VPN bei einem Wechsel des Anknüpfungspunktes des MKs an das VPN, wobei der MK mit einem VPN-Gateway über einen IPsec-Tunnel verbunden ist, dessen Pfad über mindestens einen NSIS-Knoten verläuft gelöst.

In einem ersten Verfahrensschritt A ist dabei vorgesehen, mindestens die IP-Adresse des VPN-Gateways und/oder eines mit dem Subnetz des VPN-Gateways übereinstimmenden Adressraums in ein in der NSIS-Signalisierungs-Nachricht enthaltenes MRI-Objekt einzufügen.

In einem zweiten Verfahrensschritt B wird ein SPI-Wert festgelegt.

In einem dritten Verfahrensschritt C wird der SPI-Wert in das MRI-Objekt der NSIS-Signalisierungs-Nachricht eingefügt.

In einem vierten Verfahrensschritt D wird das S-Flag im MRI- . Objekt gesetzt.

In einem fünften Verfahrensschritt E wird ein sich auf die IP-Addresse des MK beziehender Adressraum in das MRI Objekt eingefügt. Dies kann beispielsweise durch Angabe der IP-Adresse des MKs sowie eines Präfixes erfolgen.

Das im GIST-Protokoll vorgesehene MRI-Objekt erlaubt neben der Angabe einer einzigen IP-Adresse auch die Angabe eines Adressraums. Ein MK der seinen Anknüpfungspunkt innerhalb eines bestimmten Zugangsnetzes wechselt, kann deshalb im MRI-Objekt beispielsweise durch ein Präfix auch einen Adressraum angeben, der den gesamten Adressraum des Zugangsnetzes umfasst, über das der MK momentan angeschlossen ist, bzw. innerhalb dem der Anknüpfungspunkt des MK liegt. Ebenso kann ein MK, der zwischen verschiedenen Zugangsnetzen wechselt, auch den gesamten IP-Adressraum im MRI-Objekt angeben, innerhalb dem sich der MK üblicherweise bewegt.

Das VPN-Gateway hat demgegenüber in den meisten Fällen nur eine einzige IP-Adresse oder nur sehr wenige, zu einem einzigen IP-Subnetz gehörende IP-Adressen. Aus diesem Grund ist es in den meisten Fällen ausreichend, nur eine einzige IP-Adresse für das Gateway im MRI-Objekt anzugeben, oder wiederum beispielsweise mittels eines Präfixes einen Adressraum anzugeben, der mit dem Subnetz des Gateways übereinstimmt.

Die NSIS-Knoten entlang des Pfades des Tunnels verwenden in Verbindung mit anderen Header-Feldern den Sicherheits-Parameter-Index (Security Parameter Index; SPI), um den Datenverkehr zu identifizieren, auf den sich die Signalisierungs-Nachrichten beziehen. Damit dies funktioniert, sind die Signalisierungs-Nachrichten für den IPsec-Tunnel erfindungsgemäß so aufgebaut, dass sie das optionale SPI-Feld im pfadgekoppelten (path-coupled) MRI-Objekt enthalten. Darüber hinaus muss das S-Flag für das MRI-Objekt gesetzt werden.

Da die SPI-Werte nur 32 Bits lang sind, kann es vorkommen, dass derselbe SPI-Wert für die IPsec-Tunnel zwei verschiedener MKs auswählt wird. Hieraus entsteht eine Kollision, wenn die beiden MKs mit dem Selben VPN Gateway verbunden sind, und wenn sie denselben Adressraum bzw. die Selbe Präfix verwenden, also sich in demselben Adressraum bewegen. Solche Kollisionen sind unerwünscht, da diejenigen NSIS-Knoten, die in einem gemeinsamen Abschnitt der Pfade der beiden Tunnel liegen, nicht in der Lage sind, zwischen den zu unterschiedlichen Tunneln gehörenden Datenpaketen zu unterscheiden. Grundsätzlich sind jedoch mehrere Methoden denkbar, mit denen das Auftreten solcher Kollisionen verhindert werden kann. Beispielhaft sind nachfolgend vier verschiedene Möglichkeiten aufgelistet:
- Das VPN Gateway wählt nicht dieselben SPI-Werte für mehrere unterschiedliche, nach dem MOBIKE-Standard aufgebaute MK-zu-VPN IPsec-Tunnel aus. In Anbetracht der Tatsache, dass der SPI-Wert 32 Stellen aufweist, entsprechend 2³² möglichen verschiedenen SPI-Werten, sollte dies für die meisten Fälle als ausreichend erachtet werden.
- Die NSIS-Knoten sollen nicht nur mit dem SPI-Wert in den Datenpaketen abgeglichen werden, sondern auch mit dem im MRI-Objekt angegebenen IP-Adressbereich des MK. Diese Vorgehensweise stimmt im Wesentlichen mit dem standardmäßigen Geist-Ablauf überein.
- Damit die oben angegebenen Maßnahmen nutzbringend sind, sollte der MK eine einzige IP-Adresse für das VPN Gateway im MRI-Objekt angeben und den Adressraum für die eigene IP-Adresse so weit wie möglich einschränken. Dies ist dann sinnvoll, wenn der MK gegenwärtig beispielsweise die Adresse 155.234.15.6 hat, und sich nur innerhalb des Subnetzes des 155.234 Klasse B Netzwerks bewegt. Ein solcher Fall tritt häufig in Netzwerken großer Unternehmen oder Organisationen auf, innerhalb denen die Mitarbeiter mit ihren als MK bezeichneten Geräten frei bewegen können. In obigem Beispiel gibt der MK seine momentane IP-Adresse zusammen mit einem Präfix von 16 im MRI-Objekt an.
- Der MK wählt einen SPI-Wert für den VPN-nach-MK-Tunnel der nur sehr unwahrscheinlich mit den SPI-Werten anderer MKs übereinstimmt. Hierzu wird der SPI-Wert beispielsweise zufällig ausgewählt, oder mittels einer geeigneten Funktion durch den NSIS-Session-Identifier bestimmt.

Die Erfindung ist insbesondere im Bereich der Herstellung und dem Vertrieb von mittels mobiler Endgeräte nutzbaren Virtuellen Privaten Netzwerken sowie von Netzwerkkomponenten für solche Netzwerke gewerblich anwendbar.

## Patentansprüche

1. Verfahren zur Verringerung des Sighalisierungs-Overheads eines Mobilen Knotens (MK), der mindestens eine aktive Next-Steps-In-Signaling(NSIS)-Signalisierurigs-Session unterhält sowie eine MOBIKE Verbindung mit einem Virtuellen-Privaten-Netzwerk(VPN)-Gateway hat, und der seinen Anknüpfungspunkt an das Internet wechselt,
**gekennzeichnet durch** die Verfahrensschritte:
- Einfügen mindestens der IP-Adresse des VPN-Gateways und/oder eines mit dem Subnetz des VPN-Gateways übereinstimmenden Adressraums in ein in der NSIS-Signalisierungs-Nachricht enthaltenes Routing-Information (Message Routing Information; MRI) -Objekt,
- Festlegung eines Werts für einen Sicherheits-Parameter-Index (Security Parameter Index; SPI),
- Einfügen des SPI-Werts in das MRI-Objekt, sowie
- Setzen des S-Flags im MRI-Objekt, sowie
- Einfügen eines sich auf die IP-Adresse des MK beziehenden Adressraums in das MRI Objekt, wobei
- der Adressraum für die eigene IP-Adresse des MK so weit wie möglich eingeschränkt wird, indem der sich auf die IP-Adresse des MK beziehende Adressraum **durch** Angabe einer IP-Adresse des MK und eines Präfix angegeben wird.

2. Verfahren nach Anspruch 1,
**dadurch gekennzeichnet,**
**dass** der Präfix angibt, welcher Teil der IP-Adresse des MKs sich ändern kann, ohne dass die IP-Adresse des MKs den zugehörigen Adressraum verläßt.

3. Verfahren nach Anspruch 1 oder 2,
**dadurch gekennzeichnet,**
**dass** zusätzlich im MRI-Objekt ein Adressraum für die IP-Adresse des MK angegeben wird, der die unter Berücksichtigung der üblichen Bewegung des MKs zu erwartenden möglichen IP-Adressen für den MK umfasst.

4. Verfahren nach einem der vorhergehenden Ansprüche,
**dadurch gekennzeichnet,**
**dass** der SPI-Wert durch das VPN-Gateway so festgelegt wird, dass Kollisionen zwischen IPsec-Tunneln, die zwischen unterschiedlichen MKs und demselben VPN-Gateway bestehen, vermieden werden.

5. Verfahren nach einem Ansprüche 1 bis 3,
**dadurch gekennzeichnet,**
**dass** der SPI-Wert zufällig ausgewählt, oder mittels einer geeigneten Funktion durch den NSIS-Session-Identifier festgelegt wird.

## Claims

1. Method for reducing signalling overhead of a mobile node (MN) that maintains at least one active Next Steps In Signalling (NSIS) session and likewise has a MOBIKE connection to a virtual private network (VPN) gateway and changes its point of attachment to the Internet, **characterised by** the following process steps:
- at least the IP address of the VPN gateway and/or an address space corresponding to the subnetwork of the VPN gateway is/are inserted into the message routing information (MRI) object contained in the NSIS message,
- a value is defined for a security parameter index (SPI),
- the SPI value is inserted into the MRI object, and
- the S flag is set in the MRI object, and
- an address space that refers to the IP address of the MN is inserted into the MRI object,
- the address space for the MN's own IP address is restricted as far as possible, wherein the address space that refers to the IP address of the MN is indicated by stating an IP address of the MN and a prefix.

2. Method according to claim 1,
**characterised in that** the prefix indicates which part of the IP address of the MN can change without the IP address of the MN leaving the respective address space.

3. Method according to claim 1 or claim 2, **characterised in that** an address space for the IP address of the MN is additionally provided in the MRI object, said space encompassing the possible IP addresses for the MN that are to be anticipated, taking into account the usual movement of the MN.

4. Method according to one of the preceding claims,
**characterised in that** the SPI value is defined by the VPN gateway such that collisions between IPsec tunnels that exist between different MNs and the same VPN gateway are avoided.

5. Method according to one of claims 1 to 3,
**characterised in that** the SPI value is selected at random, or defined by the NSIS session identifier, using an appropriate function.

## Revendications

1. Procédé pour réduire la surcharge de signalisation d'un noeud mobile (MK) qui entretient au moins une session de signalisation active Next Steps In Signaling (NSIS) et est en liaison MOBIKE avec une passerelle de réseau privé virtuel (VPN) et change de point de rattachement à l'internet, **caractérisé par** les étapes suivantes :
- insertion d'au moins l'adresse IP de la passerelle VPN et/ou d'un espace d'adresse coïncidant avec le sous-réseau de la passerelle VPN dans un objet d'information de routage (Message Routing Information, MRI) contenu dans le message de signalisation NSIS,
- détermination d'une valeur pour un indice de paramètre de sécurité (Security Parameter Index, SPI),
- insertion de la valeur SPI dans l'objet MRI ainsi que
- mise sur vrai du drapeau S dans l'objet MRI ainsi que
- insertion, dans l'objet MRI, d'un espace d'adresse se référant à l'adresse IP du MK,
- l'espace d'adresse pour la propre adresse IP du MK étant réduit autant que possible, du fait que l'espace d'adresse qui se réfère à l'adresse IP du MK est indiqué, par mention d'une adresse IP du MK et d'un préfixe.

2. Procédé selon la revendication 1, **caractérisé en ce que** le préfixe indique quelle partie de l'adresse IP du MK peut se modifier sans que l'adresse IP du MK quitte l'espace d'adresse associé.

3. Procédé selon la revendication 1 ou 2, **caractérisé en ce qu'**est additionnellement indiqué, dans l'objet MRI, un espace d'adresse pour l'adresse IP du MK, lequel espace inclut les adresses IP possibles du MK à escompter compte tenu du mouvement habituel du MK.

4. Procédé selon l'une des revendications précédentes, **caractérisé en ce que** la valeur SPI est déterminée par la passerelle VPN de manière à éviter des collisions entre des tunnels IPsec qui existent entre différents MK et la même passerelle VPN.

5. Procédé selon l'une des revendications 1 à 3, **caractérisé en ce que** la valeur SPI est sélectionnée au hasard ou déterminée au moyen d'une fonction appropriée par l'identifiant de session NSIS.
